# EUROPEAN PATENT APPLICATION

(11) **EP 3 015 975 A1**
(43) Date of publication of application: **04.05.2016**
(21) Application number: 14191156.0
(22) Date of filing: 30.10.2014
(51) Int. Cl.: G06F 3/16, H04M 11/10

(54) **Steering device for a dictation machine**

(71) Applicant: Speech Processing Solutions GmbH, 1100 Wien (AT)
(72) Inventor: Hörndl, Manfred, 3564 Plank am Kamp (AT); Dikme, Ufuk, 1100 Wien (AT); Schneider, Gerhard, 1210 Wien (AT)
(74) Representative: Schwarz & Partner

(57) **Abstract**

A system (1; 14; 30) of a device (2; 43) to store and reproduce audio information and a steering device (5; 15; 21; 26; 31) with at least one button (11) to steer the modes of the device (2; 43) and with communications means (13; 35, 36) for a wireless communication of steering commands with communications means (4) of the device (2; 43), wherein the steering device (5; 15; 21; 26; 31) is built in the form factor of a strap (6; 16; 24; 32) to be worn at least partially around a users (7) neck (8).

## Description

### FIELD OF THE INVENTION

The present invention generally relates to a system of a device to store and reproduce audio information and a steering device with at least one button to steer the modes of the device and with communications means for a wireless communication of steering commands with communications means of the device.

### BACKGROUND OF THE INVENTION

Document EP 1 141 818 B1 discloses such a system with a hand held steering device that comprises a dictation microphone and buttons to steer the modes of a dictation application processed by a personal computer. The hand held steering device comprises an infrared transmitter to transmit audio information and steering commands to the personal computer to record the speech of the user. With this known system the user needs to hold the hand held steering device in his hand during a dictation although only at times when a button needs to be pressed real interaction of the hand with the steering device is needed. The rest of the time during dictation the user needs to hold the hand held steering device close to his mouth to achieve good quality of the captured audio. This position of the arm is exhausting for the user what is a problem of the known system.

### SUMMARY OF THE INVENTION

It is an object of the invention to provide a system as stated in the first paragraph that enables the user to keep the steering device close by and ready to use without the need to hold it in his hand the whole time. This object is achieved with a steering device that is built in the form factor of a strap to be worn at least partially around a user's neck.

Such a system comprises the advantage that the steering device in the form of a strap worn around the users neck is always close by and ready for use, while keeping the hands of the user free for other actions needed. If a microphone is part of the strap the advantage is achieved that it is always close by the mouth to capture good quality audio. If the strap is made of a material or a composition of materials a user may bend with his fingers and if this strap essentially keeps the form bent by the user, the advantage is achieved that the microphone may be brought and kept in the right distance to the mouth to further improve the quality of the captured audio information. In another embodiment of the invention a housing of the microphone connected to the strap may be tilted in relation to the strap and advantageously enables the user to bring and keep the microphone in the right distance to the mouth of the user to capture high quality audio information.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system of a steering device and a mobile phone according to a first embodiment of the invention.
Figure 2 shows a system of a steering device and a mobile phone according to a second embodiment of the invention.
Figure 3 shows the steering device of Figure 2 with different buttons on the steering device and the strap in a bent position.
Figure 4 shows steering devices according to a third embodiment of the invention with a magnetic lock.
Figure 5 shows four further embodiments of steering devices according to the invention.
Figure 6 shows a user that wears one of the embodiments of the steering device according to Figure 5.
Figure 7 shows a system of a steering device and a mobile phone and a personal computer according to a further embodiment of the invention.

### DETAILED DESCRIPTION OF EMBODIMENTS

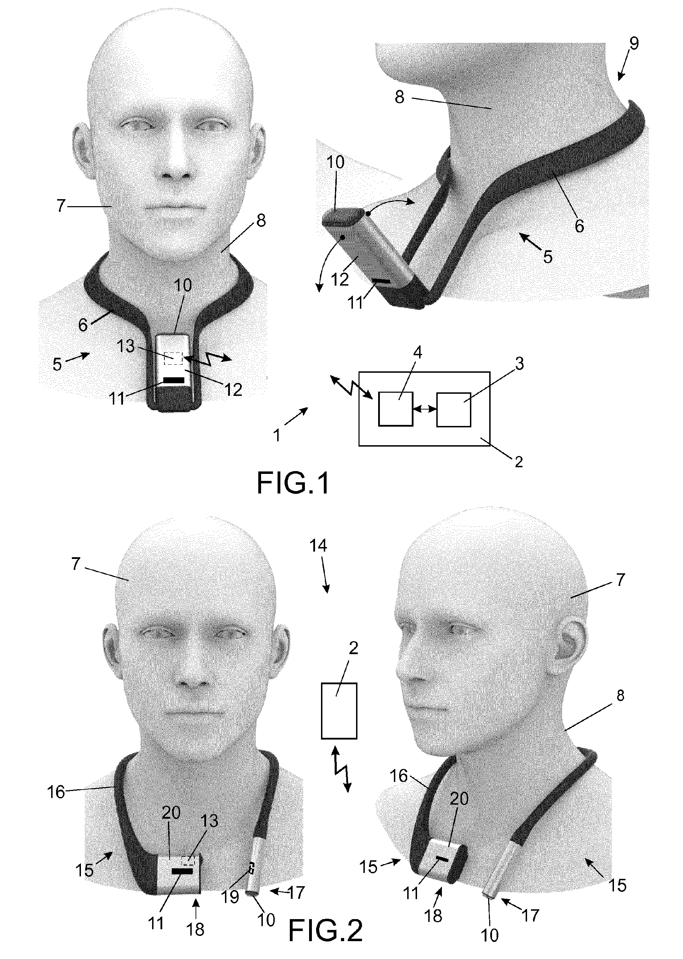

Figure 1 shows system 1 of a device realized as mobile phone 2 that processes a dictation application 3 to store and reproduce audio information. Dictation applications or "Apps" are known for instance from companies like Speech Processing Solutions, Dragon or Olympus. Mobile phone 2 that processes the dictation application 3 enables the user to capture spoken words with a microphone and store them for further processing or reproduction with a speaker. The mobile phone 2 furthermore comprises communication means 4 realized according to the Bluetooth Standard to wireless communicate with other devices that comply with the Bluetooth Standard.

The system 1 furthermore comprises a steering device 5 built in the form factor of a strap 6 a user 7 wears partially around his neck 8. The strap 6 is not a circular closed strap, but a strap with an open area 9 that eases to put the strap 6 around the neck 8 and that keeps it secured around the neck 8. The steering device 5 comprises a microphone 10 to capture audio information from the user 7 and one button 11 to input the steering commands REC and STOP. The microphone 10 is realized on one end of a housing 12 while the other end of the housing 12 is connected to the strap 6 as part of the strap 6. The housing 12 may be tilted in relation to the strap to vary the distance between the microphone 10 and the mouth of the user 7. This enables user 7 to adjust the distance between his mouth and the microphone 10 to achieve best quality of the captured audio information. The housing 12 furthermore comprises communication means 13 realized according to the Bluetooth Standard to wireless communicate captured audio information and steering commands with the communication means 4 of the mobile phone 2.

User 7 of the system 1 may activate the dictation application 3 at his mobile phone 2 and put the strap 6 around his neck 8 to get ready for a dictation. He then adjusts the distance between the microphone 10 and his mouth and presses button 11 to generate the REC steering command. The REC steering command is transmitted by the communication means 13 to the communication means 4 of the mobile phone 2 and the dictation application 3 starts to store audio information received from the microphone 10. During the whole dictation the user 7 has his hands free and can walk around to take the dictation that is stored in his mobile phone 2 for further processing. At the end of the dictation the user 7 again presses button 11 to generate the STOP steering command to change the mode of the dictation application 3 or the mobile phone 2 from record to stop. User 7 can at any time easily remove the strap 6 from his neck 8 due to the open area 9.

Housing 12 is realized detachable from the rest of the strap 6 to enable user 7 to take it off the strap 6. User 7 may want to detach housing 12 from the rest of the strap 6 to recharge a battery within housing 12 that provides the energy for the electronic parts within housing 12. For some instances or during short dictations user 7 may prefer to hold housing 12 of the steering device 5 in his hand what is possible with this detachable housing 12. Housing 12 may comprise further buttons to enable the input of further steering commands for the dictation application 3 like play, wind, rewind or other modes of the mobile phone 2 to e.g. take or refuse an incoming call during dictation or to steer volume up/down.

Figure 2 shows a system 14 of the mobile phone 2 that processes the dictation application 3 with a steering device 15 according to a second embodiment of the invention. Steering device 15 is built in the form factor of a strap 16 that has a first end 17 and a second end 18. First end 17 houses microphone 10 and second end 18 the communication means 13 and the button 11. First end 17 furthermore comprises a magnet 19 that interacts with a metal plate of a housing 20 in the second end 18 when held close together. This enables user 7 to close the strap 16 as a ring around his neck 8 to wear the steering device 15 like a necklace when not in use. An electronic switch within housing 20 detects when both ends 17 and 18 are close together and turns the power of the steering device 15 off.

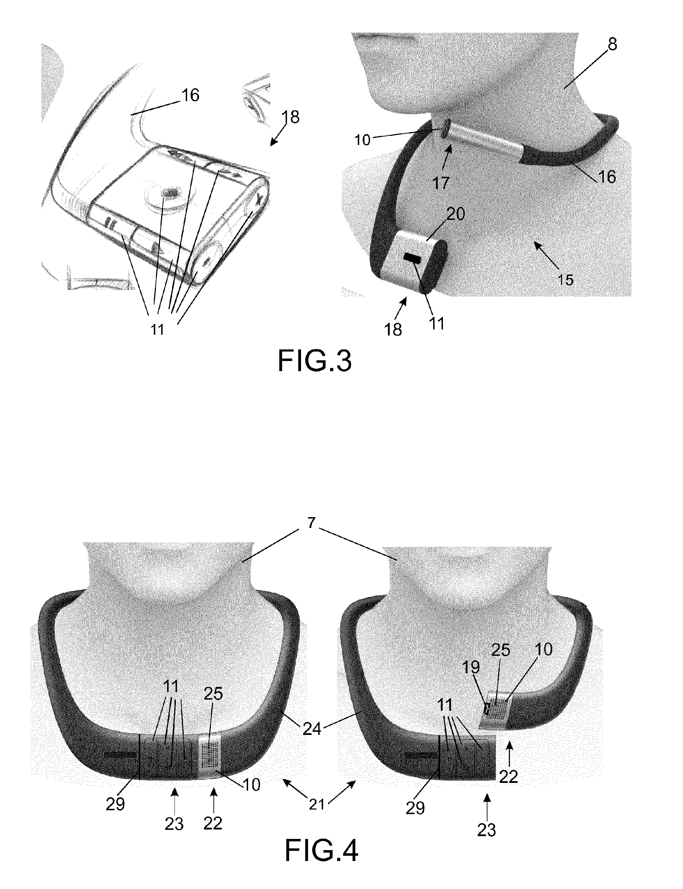

If user 7 wants to start a dictation he disconnects the first end 17 from the second end 18 against the small force of magnet 19 and bends the strap 16 with his fingers to bring the microphone 10 closer to his mouth as shown in Figure 3 on the right side. He then presses button 11 against his chest to start the storage of audio information captured with the microphone 10. To end the dictation user 7 may press button 11 again or simple close strap 16 to a ring by bringing the first end 17 close to the second end 18.

Figure 3 on the left side shows the second end 18 of strap 16 with some more buttons 11 to be used to input further steering commands for mobile phone 2. In a further variant of this embodiment housing 20 that houses the communication means 13 and buttons 11 may be detachable from the rest of strap 16.

Figure 4 shows a steering device 21 according to a further embodiment of the invention. On the left side of Figure 4 the first end 22 and the second end 23 of strap 24 are connected with magnet 19 and on the right side of Figure 4 strap 24 is open to ease to remove it from user's 7 neck 8. Strap 24 comprises a flatter upper area that houses a grate 25 above the microphone 10 on the first end 22 and several buttons 11 on the second end 23. Strap 24 may be realized with a housing of e.g. aluminum, metal or plastic. The second end 23 is detachable from strap 24 along line 29 to enable the user 7 to input steering commands in a comfortable position of his arm.

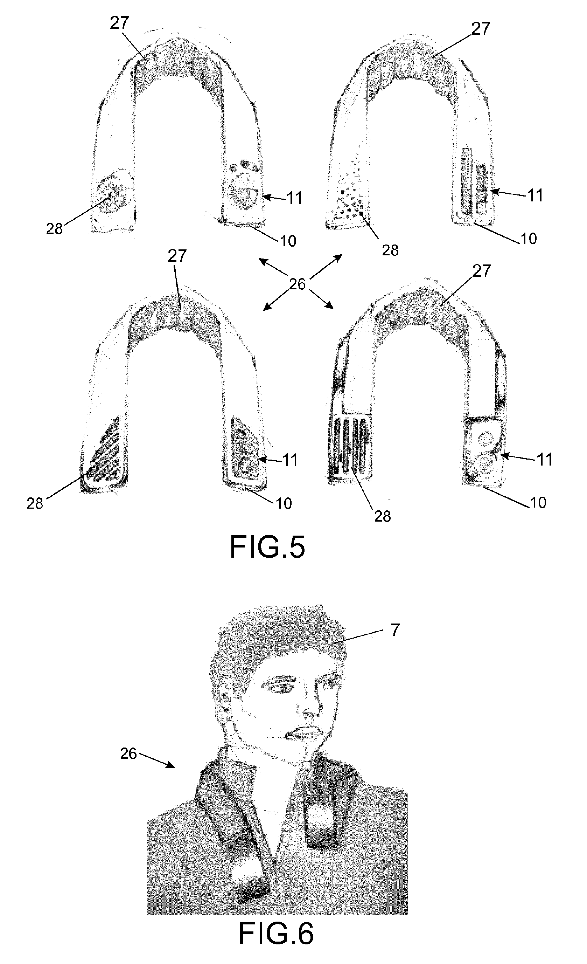

Figure 5 shows four further embodiments of steering devices 26 according to the invention. The steering devices 26 are realized in the form factor of a strap and made of a belt material with a metal wire inside to enable user 7 to bend the ends of the strap. Figure 6 shows user 7 that wears one of the steering devices 26 with both end bent upwards what helps to see buttons 11 and keep microphone 10 in the right distance.

Steering devices 26 furthermore comprise a soft area 27 at the neck of user 7 to increase the comfort. The first end of the straps of steering devices 26 comprise the microphone 10 and several buttons 11 and the second end a speaker 28 integrated to play audio information stored in the mobile phone 2. This has the advantage that user 7 may hear the stored dictation close by his ear and may bend the second end of the strap to move the speaker 28 even closer to his ear. In a further embodiment of the invention the strap furthermore comprises an earphone to directly hear the audio without disturbing other persons around.

Other materials or compositions of materials are known that may be used to produce a strap that may be bent by a user and that essentially keeps the form bent by the user. The steering device may be built to steer a lot of different devices like a dictation machine or a computer that processes a dictation application or a tablet or a smart phone or an iPod, MP3 player or similar audio reproduction device. Communication means of the steering device and the device may communicate according to any other known international standard like e.g. WLan, DECT or a company standard in the RF band. The steering device may comprise a data storage to buffer captured audio information until the communications means of the steering device and the device are close enough to transmit the captured audio information or steering commands. The form factor of the strap enables the technical effect to bring buttons 11 and the microphone 10 and the speaker 28 in the correct distance for use and enables high quality capturing of audio information and high quality reproduction of audio information.

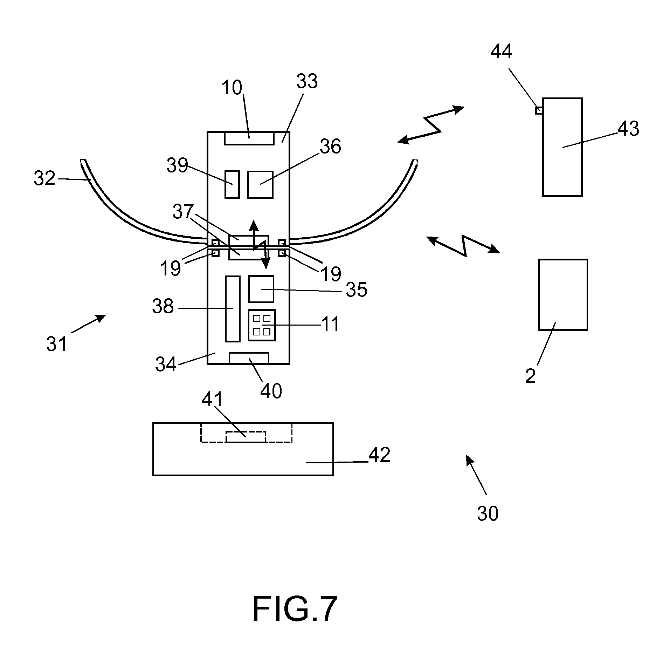

Figure 7 shows a system 30 of the mobile phone 2 that processes the dictation application with a steering device 31 according to a further embodiment of the invention. Steering device 31 shown in Figure 7 as a symbolic block diagram is built in the form factor of a strap 32. The steering device 31 comprises a microphone housing 33 connected to the strap 32, which microphone housing 33 may be physically connected to a steering housing 34. The steering housing 34 comprises communication means 35 that are built to communicate steering commands according to the Bluetooth LE Standard. The microphone housing 33 comprises further communication means 36 that are built to communicate steering commands received from the communication means 35 and audio information captured from the microphone 10 based on the Bluetooth Dual Standard. This setup with communication means 35 and 36 in both housings 33 and 34 provides the advantage that the steering housing 34 may be disconnected from the microphone housing 33 for ease of use for the user 7, while the microphone housing 33 is still held by the strap 32 around users neck to ensure the right distance between the microphone 10 and users mouth. The communication of steering commands is realized from the communication means 35 to the further communication means 36 and to the communication means of the mobile phone 2.

Magnets 19 are used to hold the microphone housing 33 connected with the steering housing 34 and physical connectors 37 connect the electrical components of the steering device 31. Pairing of the communication means 35 with the further communication means 36 is done by physically connecting the microphone housing 33 with the steering housing 34. Pairing of the further communication means 36 with the communication means 4 of the mobile phone 2 may be done by holding the mobile phone 2 close to the steering device 31 based on the NFC Standard. Other known technologies like acoustical pairing with a special frequency tone may be used as well to ease pairing of the devices.

To ensure power supply of the steering device 31 even in case the steering housing 34 is disconnected from the microphone housing 33, both housings 33 and 34 comprise a separate power supply 38 and 39. The steering housing 34 comprises a power connector 40 to be connected with a power connector 41 of a docking station 42. In case the microphone housing 33 and the steering housing 34 are connected with connectors 37, both power supplies 38 and 39 are loaded by the docking station 42. In case the steering housing 34 is disconnected from the microphone housing 33, the steering housing 34 may be loaded in the docking station 42 on its own. After such loading the power supply 38 of the steering housing, disconnected from the docking station 42 again, could load the power supply 39 of the microphone housing 33 that comprises a lower electrical capacity than the power supply 38. This always ensures a good power supply of the steering device 31. Instead of a docking station 42, the steering device 31 may be loaded via a USB port by e.g. a personal computer.

At least the microphone housing 33, but more advantageously the complete housing of the steering device 31 is built of a material that suppresses structure-born sound. This ensures that the microphone 10 will not capture noise generated by rubbing of the microphone housing 33 along user's cloths or chest. A man skilled in the art knows what materials can be used, but for example coat of an animal ensures to suppress such noise.

According to a further embodiment the steering device 31 may be paired with a personal computer 43 as device that processes the dictation application 3. A dongle 44 connected to the USB port of the personal computer 43 simulates the computer a microphone and comprises communication means that comply with the Bluetooth Dual Standard. This enables a plug and play communication of the personal computer 43 with the steering device 31 to capture audio information of the user and steer the functions of the dictation application 3.

## Claims

1. System (1; 14; 30) of a device (2; 43) to store and reproduce audio information and a steering device (5; 15; 21; 26; 31) with at least one button (11) to steer the modes of the device (2; 43) and with communications means (13; 35, 36) for a wireless communication of steering commands with communications means (4) of the device (2; 43), **characterized in, that**
the steering device (5; 15; 21; 26; 31) is built in the form factor of a strap (6; 16; 24; 32) to be worn at least partially around a users (7) neck (8).

2. System (1; 14; 30) according to claim 1, wherein the steering device (5; 15; 21; 26; 31) comprises a microphone (10) to capture audio information and wherein the communication means (13; 35, 36) of the steering device (5; 15; 21; 26; 31) and the device (2; 43) are built to communicate captured audio information.

3. System according to any of the proceeding claims, wherein the device is a dictation machine to store and reproduce spoken words of the user (7) and the steering commands comprise at least one command of the following group of commands: play, stop, record, wind rewind, volume up/down.

4. System (1; 14; 30) according to any of the proceeding claims, wherein the strap (6; 16; 24; 32) is built of a material or a composition of materials that enable the user (7) to bend the strap (6; 16; 24; 32) with finger forces which strap (6; 16; 24; 32) essentially keeps the form bent by the user (7).

5. System (1; 30) according to any of the claims 1 to 3, wherein the steering device (5; 31) comprises a housing (12; 33) for the microphone (10) connected to the strap (6; 32) which housing (12; 33) is built to be tilted in relation to the strap (6; 32) to vary the distance between the microphone (10) and user's (7) mouth.

6. System (14) according to any of the claims 1 to 3, wherein the strap (16) comprises a first end (17) and a second end (18) and wherein the microphone (10) is housed in the first end (17) of the strap (16) and the communications means (13) and/or the at least one button (11) is housed in the second end (18) of the strap (16).

7. System according to any of the proceeding claims, wherein the steering device (26) comprises a speaker (28) and/or an earphone to reproduce audio information and wherein the communication means of the steering device (26) and the device are built to communicate audio information stored in the device for reproduction with the steering device (26).

8. System (14) according to any of the proceeding claims, wherein the strap (16; 24) comprises a first end (17; 22) and a second end (18; 23) which ends house at least one magnet (19) which enables user (7) to connect and to disconnect the first end (17; 22) and the second end (18; 23) of the strap (16; 24).

9. System (30) according to any of the proceeding claims, wherein the steering device (15; 31) comprises a steering housing (20; 34) for the communication means (13; 35) and the at least one button (11) and a first power source (38), which steering housing (20; 34) is detachable connected with the strap (16; 32).

10. System (30) according to claim 9, wherein the steering device (31) comprises a microphone housing (33) for the microphone (10) and further communication means (36) and a second power source (39), which microphone housing (33) is detachable connected with the strap (32) and/or the steering housing (34).

11. System (30) according to claim 10, wherein the communication means (35) of the steering housing (34) are built to communicate steering commands with the further communication means (36) of the microphone housing (33) which are built to communicate audio information and steering commands with the communication means (4) of the device (2; 43).

12. System (30) according to claim 11, wherein the communication means (35) of the steering housing (34) are built to be paired with the further communication means (36) of the microphone housing (33) by physical connecting the two housings (33, 34) wherein the further communication means (36) of the microphone housing (33) are built to be paired with the communication means (4) of the device (2) via NFC technology or acoustical pairing.

13. System (30) according to claim 10 or 11, wherein the steering housing (34) of the steering device (31) is built to be connected to the microphone housing (33) of the microphone (10) which connection initiates loading of the second power source (39) with the first power source (38).

14. System (30) according to any of the claims 9 to 13, wherein the steering housing (34) of the steering device (31) is built to be connected to a docking station (42) to load the first power source (38) only or the first power source (38) and the second power source (39) together.

15. System (30) according to any of the proceeding claims 9 to 14, wherein the microphone housing (33) of the microphone (10) is built of a material that suppresses structure-born sound.

16. System (30) according to any of the claims 9 to 11 or 13 to 15, wherein the further communication means (36) in the microphone housing (33) are built for a plug and play communication with communication means in a dongle (44) connected to a personal computer (43) as device.

17. Steering device (5; 15; 21; 26; 31) with at least one button (11) to steer the modes of a device (2; 43), **characterized in that** the steering device (5; 15; 21; 26; 31) comprises the features of the steering device (5; 15; 21; 26; 31) of the system (1; 14; 30) according to any of the proceeding claims.
